# EUROPEAN PATENT APPLICATION

(11) **EP 3 010 111 A1**
(43) Date of publication of application: **20.04.2016**
(21) Application number: 15188939.1
(22) Date of filing: 08.10.2015
(51) Int. Cl.: H02J 4/00

(54) **HIGH-VOLTAGE DIRECT CURRENT POWER DISTRIBUTION AND FAULT PROTECTION**

(30) Priority: 15.10.2014 US 201414514617
(71) Applicant: Astronics Advanced Electronic Systems Corp., Kirkland, WA 98034 (US)
(72) Inventor: JOUPER, Jeffrey A., Newcastle, WA Washington 98056 (US)
(74) Representative: Manitz, Finsterwald & Partner GbR

(57) **Abstract**

A power distribution system including a high-voltage direct current unit (HVDCU) (102) configured to receive an amount of high-frequency alternating current (AC) input power from a power source (101) and convert the input power into high-voltage DC power, a negative voltage distribution rail and a positive voltage distribution rail that are together configured to supply the high-voltage DC power to at least one control unit (CU) (103; 104) electrically disposed between the negative voltage distribution rail and the positive voltage distribution rail and the CU (103; 104) being configured to convert the high-voltage DC power into output power compatible with at least one load (105) and supply the output power to the loads associated with it.

## Description

### FIELD OF THE DISCLOSURE

The subject matter of the present disclosure generally relates to power distribution systems, and more particularly relates to distribution of high-voltage direct current.

### BACKGROUND OF THE DISCLOSURE

The distribution of power among several loads presents certain challenges. This can be particularly true in environments where there is a limited amount of available power, but where hardware complexity and duplication are disadvantageous.

For instance, in commercial aircraft, power having certain characteristics should be supplied simultaneously to numerous loads, from consumer power outlets for use in powering personal electronic devices such as laptops or cellular telephones to reading lights and seatback electronic displays. Previous aircraft power distribution systems typically involve the distribution of raw aircraft power from a head-end device such as a power management system or circuit breaker, through a side wall disconnect panel to a first seat group. Power is then distributed from the first seat group to additional seat groups through seat-to-seat cabling that carries the power required by seat mounted power conversion units, which in turn provide power to a passenger interface at household voltage and frequency. Power carried through such seat-to-seat distribution networks is often 115 volt alternating current (VAC), three-phase power of either fixed (400 Hz) or variable (360-800 Hz) frequency. Seat power converters are necessary to convert this power to 110 VAC 60 Hz or other voltages to power passengers' electronic devices.

Systems of this type require seat power converters that are suitable for use with an aircraft platform, and thus they preferably have certain capabilities and characteristics, such as power factor correction, a low electromagnetic interference (EMI) signature, low current harmonics and a low load demand variation. Thus, the seat power converters often contain complex circuitry, such as energy storage and filtering devices, to adequately meet these requirements. In addition to the disadvantages inherent in complex circuitry, undesirable heat is generated at the point of conversion by processing power locally at the passengers' seats.

Often, various power management functions are accomplished alongside power distribution. Certain load distribution and management systems (LDMSs) have been previously disclosed. United States Patent No. 5,754,445, titled "Load Distribution and Management System," by Jouper et al. relates to such systems. U.S. Pat. No. 6,046,513, titled "Load Distribution and Management System," by Jouper et al., U.S. Pat. No. 8,295,065, titled "System control by use of phase rotation signaling" by Jouper, and U.S. Pat. App. No. 2012/0,139,341, titled "System control by use of phase rotation signaling," by Jouper, each relate to LDMSs. The disclosures of U.S. Pat. Nos. 5,754,445, 6,046,513, 8,295,065 and U.S. Pat. App. No. 2012/0,139,341 are hereby incorporated by reference herein in their entirety.

The subject matter of the present disclosure is directed to overcoming, or at least reducing the effects of, one or more of the problems set forth above.

### BRIEF SUMMARY OF THE DISCLOSURE

Disclosed is a system and method for the distribution of power to several loads.

In an embodiment, a power source supplies AC input power to a high-voltage direct current unit (HVDCU) that is configured to convert the AC input power into high-voltage DC power. The high-voltage DC power is distributed to various loads through control units (CUs) that further process the power as necessary to conform to load requirements. Distribution of power from the HVDCU is accomplished over a first and second distribution rail, one carrying a positive voltage and the other carrying an equal but negative voltage. A ground fault circuit interrupter (GFCI) is employed and monitors the differential between the voltage distribution rails to protect against faults. An arc fault circuit interrupter (AFCI) may also be employed.

Thus a safe and effective power distribution system using DC power is provided. Less power processing must be accomplished locally in proximity to the various loads, decreasing hardware requirements in complex systems. Weight reduction may be particularly advantageous to aircraft operators, as even small weight savings can lead to increases in aircraft performance, reduced initial capital and maintenance costs, and significant cost savings over the operational life span of the aircraft, particularly from reduced fuel consumption.

### BRIEF DESCRIPTION OF THE DRAWINGS

The foregoing summary, preferred embodiments, and other aspects of the present disclosure will be best understood with reference to a detailed description of specific embodiments, which follows, when read in conjunction with the accompanying drawings, in which:
Figure 1 is a schematic diagram of an embodiment contained within a commercial aircraft.
Figure 2 is a schematic diagram of a centralized high-voltage direct current unit of an embodiment.
Figure 3 is a schematic diagram of a ground fault circuit interrupter operating in an embodiment.

Like reference numbers and designations in the various drawings indicate like elements.

### DETAILED DESCRIPTION

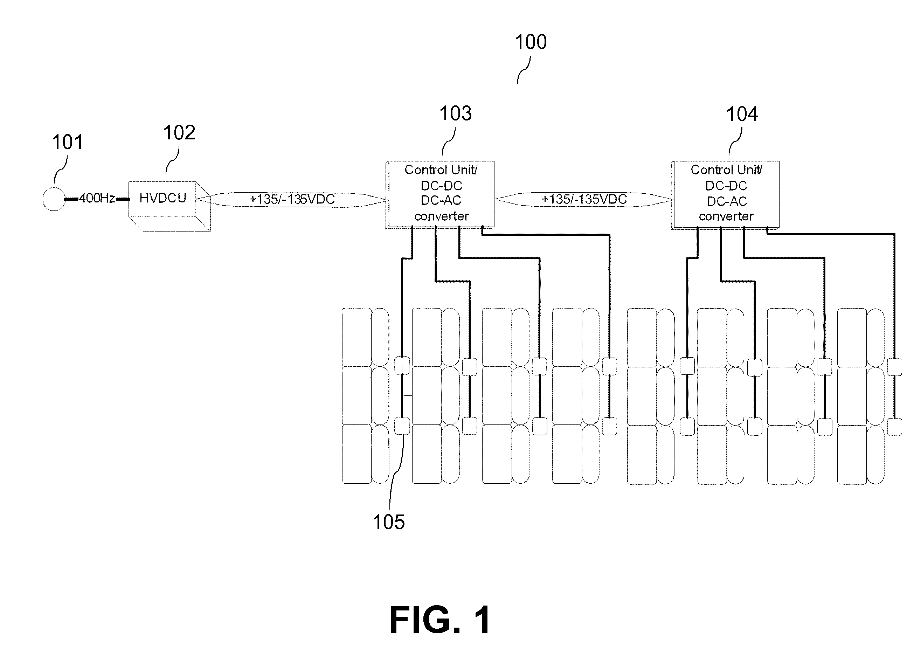

Figure 1 is a schematic illustration of an embodiment. Aircraft power distribution and management system **100** has power source **101** that provides high-frequency AC input power to high-voltage direct current unit (HVDCU) **102**. HVDCU **102** converts the input power into high-voltage DC power. The high-voltage DC power is transferred via a negative distribution rail and a positive distribution rail, one of which carries a positive voltage and one of which carries a negative voltage. The high-voltage DC power is transferred to control units (CUs) **103** and **104** that are electrically disposed between the distribution rails. Each CU is configured to convert the high-voltage DC power into output power that is compatible with a load(s) **105**. Depending on the power needs of the loads, CUs may include DC-DC and/or DC-AC converter hardware.

Various loads can be optionally supported, including without limitation such items as reading lights, electronic displays, AC consumer power outlets, USB power outlets, passenger address systems, wireless access points and personal electronic devices.

It should be understood by those of skill in the art to which the present disclosure pertains that the described HVDCUs and CUs may be employed in any suitable number or configuration. For instance, in a passenger aircraft zones may be established, each with a HVDCU supporting multiple CUs. High-frequency power as used in the present disclosure refers to currency with a frequency inclusive of between 360 and 800 Hz. The input power may be 115 VAC 400 Hz three-phase power, 115 VAC 360-380 Hz three-phase power, 230 VAC 400 Hz three-phase power or 230 VAC 360-380 Hz three-phase power or any other voltage as is available in the host vehicle. High-voltage DC power should be considered be greater than 30VDC.

Some embodiments may perform power management functions in addition to distribution functions. For instance, in a situation where additional power is not available, the HVDCU and CUs may be configured to disable unused outlet units so that additional loads are not added to the power system, while still allowing those loads that are already drawing power to continue doing so. Thus, disruption to the passengers of a vehicle employing such an embodiment would be reduced, while load management is still accomplished effectively.

Some HVDCUs of certain embodiments may, in addition to a status whether power is available, make use of additional inputs in determining whether to disable unused or all outlet units. Power management may thus be accomplished in response to the dynamic circumstances in which an embodiment may operate. In one instance, the system may take an input from other systems such as the cabin thermal management to limit the overall power by disabling unused outlets based on thermal characteristics. In a second instance, a HVDCU may disable all outlets in a decompression event on an aircraft, thereby conserving power for more critical aircraft systems.

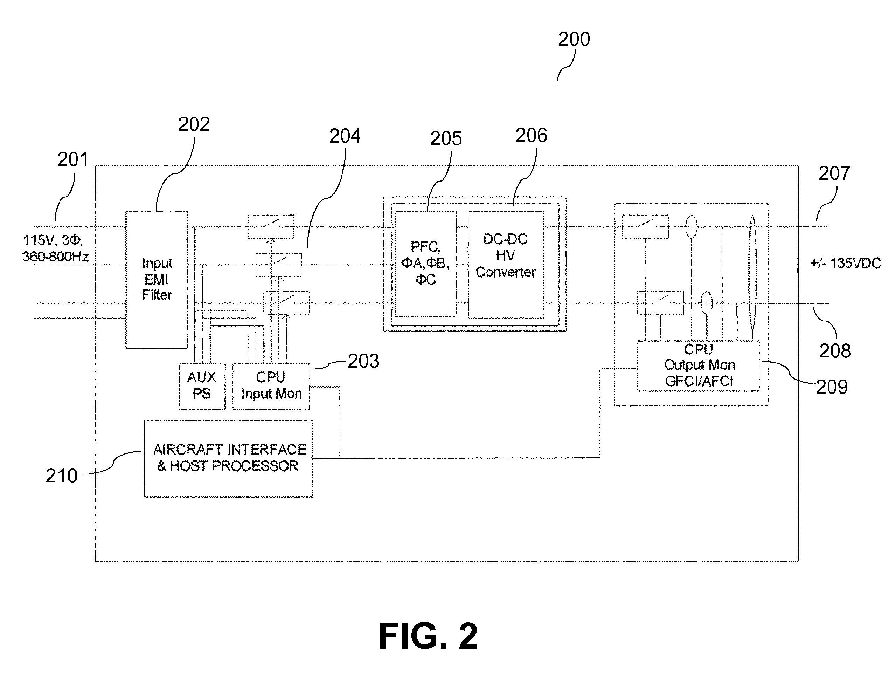

Figure 2 is a schematic diagram of HVDCU **200** of an embodiment. High-voltage AC power is received along input power lines **201** and is fed to EMI filter **202**, where electromagnetic filtering is conducted. Switching noise from internal circuits is suppressed and filtered to prevent it from entering back into input power lines **201**. Input monitor central processing unit (CPU) **203** monitors the input power to determine whether it is within the nominal voltage and frequency range (typically 102-122 VAC and 360-800 Hz). When the input voltage is within an allowable range, relays **204** are closed to allow power to flow to power factor correction (PFC) unit **205**. PFC unit **205** corrects for current harmonics and power factor to satisfy aircraft platform requirements. Intermediate power, typically in the form of 350 VDC, is then passed to DC-DC HV converter **206**. This intermediate power is used to store energy for short periods of power loss, typically in the range of 1-200 mSec. DC-DC HV converter **206** processes the intermediate power and supplies it onto positive DC distribution rail **207** and negative DC distribution rail **208**, each of which carries approximately 135 VDC. Output monitor CPU **209** monitors the current consumption and output voltage along each distribution rail and acts to detect short circuit conditions, leakage current and arc fault events.

Interface and host processor **210** interprets signals from the other vehicle systems. In an aircraft, information regarding decompression, weight-on-wheels, power availability, cabin environmental management and system On/Off status allow HVDCU **200** to control the system as necessary during various flight phases.

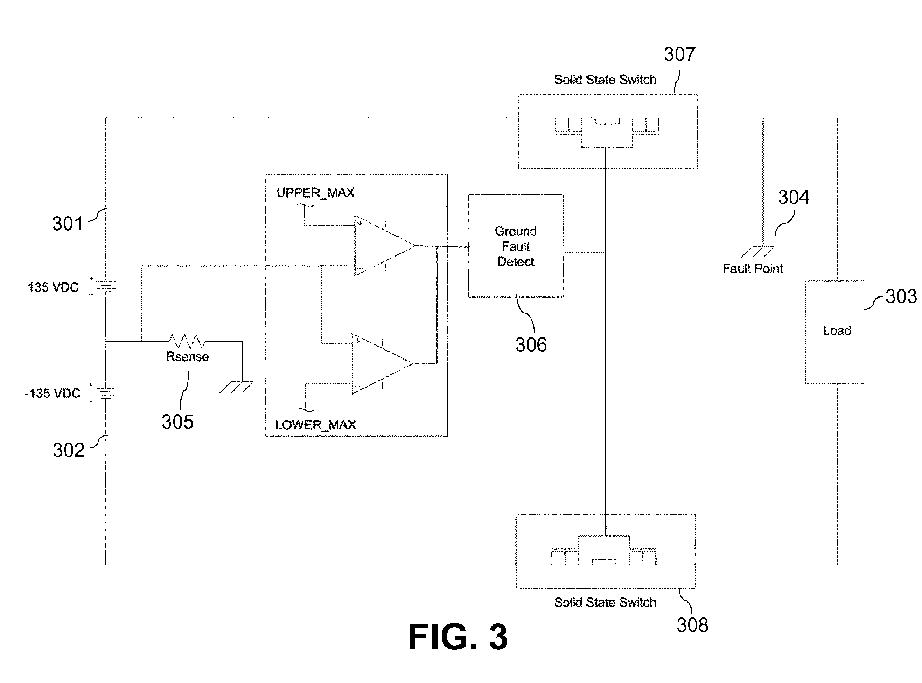

In traditional systems employing 270VDC it was very difficult to discern leakage current from load current because the return is referenced to the aircraft structure. The disclosed dual voltage rail system presents advantages in this respect, particularly the ability to monitor leakage current from either distribution rail to the chassis in order to mitigate even minor faults to the structure. Figure 3 illustrates the sensing of leakage current from one of the rails.

Figure 3 is a schematic illustration of a ground fault circuit interrupter (GFCI) that may be employed in certain embodiments, particularly in an aircraft. Distribution rails **301** and **302** deliver power to load **303** that typically consumes power equally from each rail. However, a ground fault occurs at fault point **304**. If the fault is human contact, that individual may be subject to severe injury. Resistor **305** has a relatively high impedance between the aircraft frame and a point between the distribution rails. While the load is drawing current from both voltage rails, the voltage developed across resistor **305** is ideally zero. If either distribution rail has a leakage path to the frame, such as is the case with fault point **304**, then a voltage equivalent to the current through the fault path will be developed across resistor **305**. The set-point can be chosen arbitrarily, for example such as at the positive rail at +200 VDC and the negative rail at -70 VDC. If either an upper or lower threshold is exceeded, ground fault detect unit **306** can cease power flow over the distribution rails, in this embodiment by controlling first solid state switch **307** and second solid state switch **308**.

In certain embodiments, in addition to the GFCI, an arc fault circuit interrupter (AFCI) will trigger on the occurrence of intermittent current events. An output control CPU of a HVDCU monitors each voltage distribution rail's output current for spurious current in excess of that normally seen by the load types being serviced. These spurious currents are indicative of either series or parallel arc faults, which can be too short in their duration to trip the output current limit function. Thus, together the GFCI and AFCI can mitigate certain safety concerns present with the use of high-voltage DC systems.

Although the disclosed subject matter has been described and illustrated with respect to embodiments thereof, it should be understood by those skilled in the art that features of the disclosed embodiments can be combined, rearranged, etc., to produce additional embodiments within the scope of the invention, and that various other changes, omissions, and additions may be made therein and thereto, without parting from the spirit and scope of the present invention.

## Claims

1. A power distribution system, **characterized by**:
A high-voltage direct current unit (HVDCU) (102; 200) configured to receive high-frequency alternating current (AC) input power from a power source (101) and convert the input power into high-voltage DC power;
a negative voltage distribution rail (208;302) and a positive voltage distribution rail (207; 301), together configured to supply the high-voltage DC power to at least one control unit (CU) (103; 104); and
the CU (103; 104) being configured to convert the high-voltage DC power into output power compatible with at least one load (105) and supply the output power to the loads (105) associated with it.

2. The system of claim 1 **characterized in that** the or each CU (103; 104) is/are electrically disposed between the negative distribution rail (208; 302) and the positive distribution rail (207; 301).

3. The system of claim 1 or 2 **characterized in that** the negative distribution rail (208; 302) is configured to carry a voltage in a range of -30 to -200 VDC and the positive distribution rail (207; 301) is configured to carry a voltage in a range of +30 to +200 VDC power.

4. The system of any of the preceding claims **characterized in that** the power source (101) is a generator driven by an aircraft engine and the loads (105) include at least one of a reading light, a display, an AC outlet, a USB power outlet, a passenger address system, a wireless access point and a personal electronic device.

5. The system of any of the preceding claims further **characterized by** a ground fault circuit interrupter (GFCI) that includes a sensing element (306) electrically disposed between a point between the negative voltage distribution rail (208; 302) and the positive voltage distribution rail (207; 301) and a structure and that is configured to detect a voltage across it indicative that a ground fault condition exists.

6. The system of claim 5 **characterized in that** the GFCI is configured to, upon detection of a fault condition, cause a first solid state switch (307) to halt power flow in the positive distribution rail (207; 301) and cause a second solid state switch (308) to halt power flow in the negative distribution rail (208; 302).

7. The system of any of the preceding claims further **characterized by** an arc fault circuit interrupter (AFCI) configured to detect an arc fault condition between the positive distribution rail (207; 301) and the negative distribution rail (208; 302).

8. The system of any of the preceding claims **characterized in that** the HVDCU (102; 200) and the CU (103; 104) are configured to disable at least one unused load in the event that additional power is not available.

9. A method of distributing power, **characterized by**:
providing AC input power from a power source (101) to a HVDCU (102; 200);
converting the input power into high-voltage DC power using the HVDCU (102; 200);
distributing the high-voltage DC power over a negative voltage distribution rail (208, 302) and a positive voltage distribution rail (207, 301) to at least one CU (103; 104);
converting the high-voltage DC power to output power that is compatible with at least one load (105); and
distributing the output power to the loads from the CU (103; 104).

10. The method of claim 9 **characterized in that**:
the input power is selected from the group consisting of 115 Volt Alternating Current (VAC) 400 Hz three-phase power, 115 VAC 360-380 Hz three-phase power, 230 VAC 400 Hz three-phase power and 230 VAC 360-380 Hz three-phase power.

11. The method of claim 9 or 10 **characterized in that** the power source (101) is a generator driven by an aircraft engine and the loads include at least one of a reading light, a display, an AC outlet, a USB power outlet, a passenger address system or a wireless access point.

12. The method of any of claims 9 - 11 **characterized in that** the HVDCU (102; 200) and CU (103; 104) are configured to cause to be disabled any unused loads that are consumer power outlets when no additional power is available.

13. The method of any of claims 9 - 12 characterized further by the step of halting power flow to the loads (105) when detecting a voltage across a resistor that is electrically disposed between a voltage point between the negative voltage distribution rail (208, 302) and the positive voltage distribution rail (207, 301) and a structure that indicates that a ground fault condition exists.

14. The method of any of claims 9 - 13 **characterized in that** the HVDCU (102; 200) provides EMI filtering of the input power prior to converting it into high-voltage DC power.

15. The method of any of claims 9 - 14 **characterized in that** the HVDCU (102; 200) corrects the power factor of the input power prior to converting it into high-voltage DC power.
